Europäisches Patentamt

European Patent Office

Office européen des brevets

(11) Publication number: **0 037 576**
**B1**

# (12) EUROPEAN PATENT SPECIFICATION

(45) Date of publication of patent specification: **31.07.85**

(51) Int. Cl.⁴: **B 60 C 11/16**

(21) Application number: **81102584.0**

(22) Date of filing: **06.04.81**

(54) **Snow tire spikes.**

(30) Priority: **07.04.80 JP 45423/80**

(43) Date of publication of application:
**14.10.81 Bulletin 81/41**

(45) Publication of the grant of the patent:
**31.07.85 Bulletin 85/31**

(84) Designated Contracting States:
**BE DE FR GB IT NL**

(56) References cited:
**DE-A-1 480 916**
**DE-A-1 505 874**
**FR-A-1 465 921**
**FR-A-2 150 845**
**GB-A-1 034 446**
**GB-A-1 072 837**
**LU-A- 45 596**
**US-A-2 572 996**
**US-A-3 272 252**
**US-A-3 363 658**
**US-A-3 476 166**
**US-A-3 693 688**

(73) Proprietor: **SUMITOMO ELECTRIC INDUSTRIES LIMITED**
**No. 15, Kitahama 5-chome Higashi-ku**
**Osaka-shi Osaka-fu (JP)**

(73) Proprietor: **SUMITOMO RUBBER INDUSTRIES LIMITED**
**No. 1-1, Tsutsui-cho 1-chome**
**Fukiai-ku Kobe-shi Hyogo (JP)**

(72) Inventor: **Inamoto, Jiro**
**25-3, 4-chome, Tsukaguchi-cho**
**Amagasaki-shi Hyogo-ken (JP)**
Inventor: **Hayata, Naohiro**
**44-10, Aza Tozaki Futaya Noguchi-cho**
**Kakogawa-shi Hyogo-ken (JP)**

(74) Representative: **Eder, Eugen, Dipl.-Ing. et al**
**Patentanwälte Dipl.-Ing. E. Eder Dipl.-Ing. K.**
**Schieschke Elisabethstrasse 34**
**D-8000 München 40 (DE)**

Courier Press, Leamington Spa, England.

## Description

The invention relates to a snow tire spike according to the introductory clause of patent claim 1.

As prior art, from which the instant invention starts, a snow tire spike is already known wherein the spike body has an anchoring part which is surrounded by a flange of synthetic material (DE—A 1,480,916). In the case of this known spike the spike body consists of a specific hard metal. The anchoring part is in the form of a surrounding annular shoulder so that in this area securing between the plastic flange and the spike body is comparatively poor.

Another spike is known which is of integral design and consists of synthetic material only (FR—A 1,465,921). This spike body consists of a cylindrical portion which is followed by a part in the form of a truncated cone to form one piece. This known spike only has a short lifetime and is moreover not in a position to ensure a sufficient grip on a very hard icy surface.

Furthermore, a spike is known which is of integral design and in the form of a truncated cone, which, in its lower portion, has a recess (US—A 3,363,658). This pike is inserted into a cylindrical opening of the tire. The holding effect is comparatively poor and the service life short.

The prior art further comprises a spike which, at the outside, is provided with ribs respectively at the inside with one or several holes (US—A 3,693,688). This is to improve the circulation of air or liquid. This results in the spike becoming very expensive, inadvantageously increasing the overall costs for a winter tire considerably.

The problem underlying the instant invention, in contrast thereto, is to create a long-lasting spike that functions and which is cheaper to manufacture.

The solution to this problem may be inferred from the characterizing part of patent claim 1. The advantageous result is a novel design of the spike due to the combination of ceramic and synthetic material; and, due to the particular design and dimensioning of the anchoring part, extremely good fastening of the surrounding flange inside the tire is ensured.

As the spike is driven into the tire, the anchoring part consisting of ceramic stock and penetrating the tire is protected by a flange of synthetic material, the flange of synthetic material, in turn, and the anchoring part ensuring safe anchoring of the spike body when using the spike in the winter. The spike body of ceramic material, in turn, even at high temperature variations has a highly efficient grip on the road.

In the following, a few embodiments of this invention are particularly described with reference to drawings.

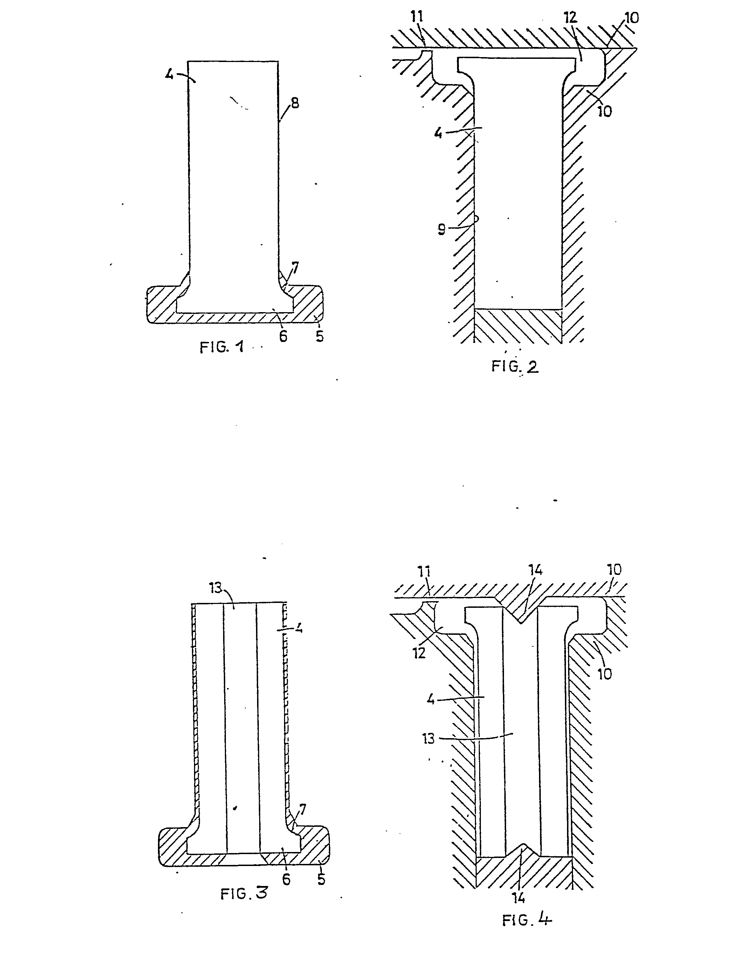

FIG. 1 delineates a longitudinal sectional view of the first embodiment of the spike of this invention; FIG. 2 depicts a longitudinal sectional view of the spike body shown in FIG. 1 being set in dies; FIG. 3 draws up a longitudinal sectional view of the spike of this invention; FIG. 4 registers a longitudinal sectional view of the spike body shown in FIG. 3 being set in dies.

In FIG. 1, the spike body 4 is formed of a ceramic material, while the flange part 5 to be held in the tire is made of plastics.

At the attaching side end of the spike body 4 a larger diameter anchoring part 6 with a diameter smaller than 1.5 times that of the ground-engaging end part, is formed, this part being integrally coated with plastics to be a flange part 5.

Furthermore, the larger diameter anchoring part 6 and the outer circumferential part of the spike body 4 are contiguously formed through an intermediary surface 7 which is smoothly tapered or arc-shaped, whereby concentration of stress on this part is relieved, thereby to provide larger strength. In addition, since the larger diameter part OD is smaller than 1.5 times the OD of the ground touching end surface, such a part may be readily molded by pressing with dies in the axial direction without requiring complex dies.

The method of forming the spike shown in FIG. 1, thus, the method for joining the spike body with the plastics flange is described with reference to FIG. 2.

In order to provide an area 8 not coated with the plastics which is either part or whole of the surface outside that of the larger diameter anchoring part 6 of the spike body 4, the ceramic part is so incorporated into the die 10 that the said area 8 is inserted in the hole 9 of the flange molding die 10, and then, the plastics is injected into the molding space 12 through a gate 11 provided at the part corresponding to one side of the flange forming part, for example. In that way, coincidentally with molding the flange, the larger diameter anchoring part at the attaching end of the spike body is embedded in the flange.

Still more, as another embodiment, a spike made further effective and reduced in weight may be obtained by providing a hole 13 of a proper size through the axial center of the spike body 4, as shown in FIG. 3. In forming the spike shown in FIG. 3, the ceramic part is held in the dies by engaging in the hole 13 the protrusions 14 formed on the inside surfaces of the injection molding dies 10. In that way, it is possible to coat whole of the ceramic part with the plastics as shown in FIG. 3.

The weight of the spike of this invention varies with the diameter of the spike body or whether it is holed or not, but is around 1.5 g, which is less than half the value for the most representative shape of the cemented carbide pin type currently in use and being approximately 3.5 g.

Although ceramic materials, generally having low break strengths and being vulnerable to impact, have the possibility of suffering breakdown while in use, there has been obtained an evidence that a ceramic material so compounded and sintered that the purity of alumina runs higher than 99% (by weight), the mean particle diameter of alumina crystal smaller than 2 μ, and

its porosity lower than 2%, is strong enough to bear practical use.

Furthermore, the ceramic material is rather inferior to the cemented carbide in abrasion on sand and gravel, and this makes it possible for this material to receive moderate wear which keeps pace with the process of the wearing of the tire.

The plastics used for molding the flange need not be particularly restricted, but nylon is most suitable where wear resistance, strength, molding characteristic and price count.

As described in the foregoing, in the spikes of the present invention, as compared with conventional spikes with cemented carbide joined at their tips, the weight is reduced to below one half, and a moderate degree of wear in harmony with the wearing of the tire is achieved.

Since the ceramic part has the outer circumferential part of the spike body extending with a smoothly shaped surface from its larger diameter anchoring part, its molding can be made by pressing the ceramic part with dies, and moreover, because the joining between the flange and the spike body may be made simultaneously with the molding of the flange, the separate process for this joining which is otherwise required is spared, thus enabling production of a low priced spike through reduction in the manufacturing cost.

## Claims

1. A snow tire spike comprising a spike body (4), provided at one end with an anchoring part (6) for fastening in the tire, having a diameter larger than that of the remaining portion of the spike body (4) and surrounded by a plastics flange (5), the remaining portion of the spike body extending from the tire and having at its other end a ground engaging surface, characterized by the combination of the following features:

a. the spike body (4) consists of a ceramic stock, known per se, which is compounded and sintered such that the purity of alumina runs higher than 99 percent by weight;

b. the average particle diameter of the alumina crystals is smaller than 2 µ, and the porosity is lower than 2%.

c. the diameter of the anchoring part (6) is smaller than 1.5 times the diameter of the ground engaging surface of the spike body (4);

d. between the anchoring part (6) and the spike body (4) there is formed an intermediate part (7) of tapered shape whose surface provides a continuous transition between the surfaces of the anchoring part (6) and the remaining part of the spike body (4).

2. Spike according to claim 1, characterized in that the spike body (4) is provided with a hole (13) in its centre.

## Patentansprüche

1. Spike für Winterreifen, mit einem Spikekörper (4) mit im Reifen befestigbarem Verankerungsteil (6), welcher einen größeren Durchmesser als der restliche Teil des Spikekörpers (4) aufweist und von einem Kunststofffflansch (5) umgeben ist, wobei der restliche Teil des Spikekörpers sich von dem Reifen erstreckt und an seinem anderen Ende eine Fläche für den Eingriff mit dem Boden aufweist, gekennzeichnet durch die Kombination folgender Merkmale:

a. der Spikekörper (4) besteht aus einem an sich bekannten keramischen Werkstoff, der so zusammengesetzt und gesintert ist, daß der reine Aluminiumoxidanteil höher als 99 Gew.-% ist;

b. der durchschnittliche Teilchendurchmesser der Aluminiumoxidkristalle ist kleiner als 2 µ und die Porosität geringer als 2 %;

c. der Durchmesser des Verankerungsteils (6) ist kleiner als das 1,5-fache des Durchmessers der mit dem Boden in Eingriff stehenden Fläche des Spikekörpers (4);

d. zwischen dem Verankerungsteil (6) und dem Spikekörper (4) befindet sich ein sich verjüngendes Zwischenteil (7), dessen Oberfläche einen kontinuierlichen Übergang zwischen den Oberflächen des Verankerungsteils (6) und dem restlichen Teil des Spikekörpers (4) schafft.

2. Spike nach Anspruch 1, dadurch gekennzeichnet, daß der Spikekörper (4) in der Mitte ein Loch (13) aufweist.

## Revendications

1. Un crampon de pneu neige comprenant un corps de crampon (4), muni à une extrémité d'une partie d'ancrage (6) pour fixation dans le pneu, ayant un diamètre plus grand que celui de la partie restante du corps de crampon (4) et entourée par une bride en plastique (5), la partie restante du corps de crampon s'étendant depuis le pneu et ayant à son autre extrémité une surface de contact avec le sol, caractérisé par la combinaison des éléments suivants:

a) le corps de crampon (4) est constitué en bloc céramique, connu en soi, composé et aggloméré de telle sorte que la pureté de l'alumine soit supérieure à 99 % en poids;

b) le diamètre de particule moyen des cristaux d'alumine est plus petit que 2µ, et la porosité est inférieure à 2 %.

c) le diamètre de la partie d'ancrage (6) est plus petit que 1,5 fois le diamètre de la surface en contact avec le sol du corps de crampon (4);

d) entre la partie d'ancrage (6) et le corps de crampon (4), est formée une partie intermédiaire (7) chanfreinée dont la surface constitue une transition continue entre les surfaces de la partie d'ancrage (6) et de la partie restante du corps de crampon (4).

2. Crampon selon la revendication 1, caractérisé en ce que le corps de crampon (4) est muni d'un trou (13) en son centre.

FIG. 1

FIG. 2

FIG. 3

FIG. 4